# EUROPÄISCHE PATENTSCHRIFT

(11) **EP 4 165 324 B1**
(45) Veröffentlichungstag und Bekanntmachung des Hinweises auf die Patenterteilung: **31.07.2024**
(21) Anmeldenummer: 21733907.6
(22) Anmeldetag: 11.06.2021
(51) Int. Cl.: F16H 25/22, B23Q 5/32, F16H 25/20

(54) **WERKZEUGMASCHINE UND VERFAHREN ZUR SPANENDEN BEARBEITUNG VON WERKSTÜCKEN**
MACHINE TOOL AND METHOD FOR MACHINING WORKPIECES
MACHINE-OUTIL ET PROCEDE POUR L'USINAGE DE PIECES

(30) Priorität: 16.06.2020 DE 102020115858
(43) Veröffentlichungstag der Anmeldung: 19.04.2023
(73) Patentinhaber: Hugo Reckerth GmbH, 70794 Filderstadt-Bonlanden (DE)
(72) Erfinder: DOBRINSKI, Alexander, 70597 Stuttgart (DE); BÖHM, Michael, 70794 Filderstadt-Bonlanden (DE); HUSHCHYN, Anatolii, Kramatorsk, 84311 (UA)
(74) Vertreter: Ostertag & Partner Patentanwälte mbB
(86) Internationale Anmeldenummer: PCT/EP2021/065783
(87) Internationale Veröffentlichungsnummer: WO 2021/254903

(56) Entgegenhaltungen:
- DE-U1- 202016 102 124
- US-A- 5 865 272

## Beschreibung

### HINTERGRUND DER ERFINDUNG

### 1. Gebiet der Erfindung

Die Erfindung betrifft eine Werkzeugmaschine und ein Verfahren zur spanenden Bearbeitung von Werkstücken, bei denen eine Hauptspindel mit Hilfe einer vorzugsweise elektromagnetischen Vorschubeinrichtung entlang einer vorzugsweise vertikalen Vorschubrichtung verfahren wird. Solche Werkzeugmaschinen werden vor allem zum Bohren, Schleifen oder Fräsen eingesetzt.

### 2. Beschreibung des Standes der Technik

Beim Bohren, Schleifen und Fräsen von Werkstücken mit Hilfe von Werkzeugmaschinen hängt die erreichbare Oberflächenqualität und Prozesssicherheit u.a. von den Werkstoffen ab, aus denen die zu bearbeitenden Werkstücke gefertigt sind. Bei der Bearbeitung spröder Werkstoffe wie etwa Glas, Gestein, Keramik, Ferrit, Edelsteinen oder polykristallinen Diamanten (PKD) entstehen häufig Risse oder Ausbrüche, die zum Ausschuss des Werkstücks führen. Schwierig ist auch die Bearbeitung von Werkstoffen mit inhomogenen und/oder anisotropen Eigenschaften, zu denen Faserverbundwerkstoffe mit der Untergruppe der faserverstärkten Kunststoffe (zum Beispiel CFK oder PCB) und Multi-Werkstoff-Verbunde sowie Stacks (CFK-Metall-Schichtverbunde) zählen. Bei diesen Werkstoffen lässt die Effektivität der Zerspanung häufig zu wünschen übrig, obwohl die Bearbeitungsqualität gering ist und die eingesetzten Werkzeuge schnell verschleißen oder beschädigt werden.

Bei den vorgenannten problematischen Werkstoffen sind vor allem die Eintrittszone und die Austrittszone des Werkzeugs am Werkstück kritisch. Dies gilt insbesondere dann, wenn die Oberfläche des Werkstücks nicht senkrecht zur Vorschubrichtung des Werkzeugs ausgerichtet ist. Anspruchsvolle Bearbeitungsaufgaben, zum Beispiel eine geneigte Glasplatte mit einer feinen Bohrung zu versehen, lassen sich bislang nicht zufriedenstellend mit den bekannten Werkzeugmaschinen lösen.

Ursächlich für diese Schwierigkeiten ist in der Regel nicht die mangelnde Qualität der eingesetzten Werkzeuge, sondern eine fehlende oder unzureichende Abstimmung der während der Bearbeitung auftretenden Zerspankräfte. Risse, Ausbrüche, Gratbildung, Delamination (bei CFK-Verbunden) oder andere Beschädigungen der Werkstücke entstehen in der Regel dann, wenn die zwischen dem Werkzeug und dem Werkstück wirkenden Drehmomente und/oder axialen Kräfte zu groß sind. Bemerkenswerterweise kommt es selbst dann gelegentlich zu Beschädigungen der Werkstücke, wenn die von den Antrieben der Werkzeugmaschine erzeugten Drehmomente und axialen Vorschubkräfte sehr klein gewählt werden. Einschlüsse und andere Inhomogenitäten im Werkstück können nämlich dazu führen, dass trotzdem kurzzeitig sehr hohe Drehmomente oder Kräfte auf das Werkstück und/oder das Werkzeug einwirken und dort Beschädigungen hervorrufen.

Aus der DE 27 47 516 A1 ist eine Werkzeugmaschine bekannt, bei welcher der von der Hauptspindel ausgeübte Bohrdruck mit Hilfe einer Sensorik überwacht wird, um Beschädigungen des Bohrers und der Hauptspindel zu vermeiden.

Aus der DE 20 2016 102 124 U1 ist eine Werkzeugmaschine nach dem Oberbegriff der Ansprüche 1 und 12 bekannt, deren Hauptspindel mit Hilfe einer elektromagnetischen Vorschubeinrichtung entlang der Vorschubrichtung verfahrbar ist. Die elektromagnetische Vorschubeinrichtung umfasst zwei Ringspulenmagnete, die zu beiden Seiten eines an der Hauptspindel befestigten Scheibenankers angeordnet sind. Durch Ansteuern der Ringspulenmagnete kann die Hauptspindel in axialer Richtung verfahren werden. Dadurch lässt sich vor allem die Eintrittsgeschwindigkeit des Werkzeugs in das Werkstück so reduzieren, dass Brüche an empfindlichen Werkstücken vermieden werden können. Der Vorschubbewegung der Hauptspindel lassen sich außerdem Mikrovibrationsbewegungen überlagern, die zu einem besseren Bearbeitungsergebnis führen.

Obwohl die Verwendung einer solchen elektromagnetischen Vorschubeinrichtung zum Vorschub der Hauptspindel zu einer spürbaren Verbesserung bei der Bearbeitung problematischer Werkstoffe führt, sind die damit zusammenhängenden Probleme nach wie vor nicht vollständig gelöst. Noch immer werden Werkstücke aus problematischen Werkstoffen vor allem dann, wenn sie dünn und/oder schräg zur Vorschubrichtung angeordnet sind, zu häufig beschädigt. Selbst bei Ausbleiben eines zum Ausschuss führenden Schadens bleibt die Bearbeitungsqualität meist deutlich hinter den Erwartungen zurück.

### ZUSAMMENFASSUNG DER ERFINDUNG

Aufgabe der Erfindung ist es, eine Werkzeugmaschine und ein Verfahren zur spanenden Bearbeitung von Werkstücken anzugeben, die bzw. das auch bei Werkstücken, die aufgrund ihrer Materialeigenschaften und/oder ihrer Form nur schwer durch Bohren, Fräsen oder Schleifen zu bearbeiten sind, bessere Bearbeitungsergebnisse erzielt.

Erfindungsgemäß wir diese Aufgabe hinsichtlich der Werkzeugmaschine durch eine Werkzeugmaschine zur spanenden Bearbeitung von Werkstücken gelöst, die eine Hauptspindel aufweist, die endseitig eine Werkzeugaufnahme trägt und so gelagert ist, dass sie um eine Drehachse drehbar und entlang der Drehachse beweglich ist. Die Werkzeugmaschine hat außerdem einen Antrieb zum Antreiben der Hauptspindel um die Drehachse und eine vorzugsweise elektromagnetische Vorschubeinrichtung, die dazu eingerichtet ist, auf die Hauptspindel eine entlang der Drehachse wirkende Kraft auszuüben. Erfindungsgemäß weist die Werkzeugmaschine ein Schraubgetriebe auf, das den Antrieb mit der Hauptspindel verbindet und dazu eingerichtet ist, die Hauptspindel in Drehung zu versetzen und gleichzeitig entlang der Drehachse zu bewegen. Das Schraubgetriebe weist ein an einem ersten Bauteil ausgebildetes Gewinde und ein an einem zweiten Bauteil ausgebildeten Mitnehmer auf, der mit dem Gewinde zusammenwirkt. Eines der beiden Bauteile ist über ein Antriebsgetriebe von dem Antrieb in Drehung versetzbar und entlang der Drehachse unbeweglich gelagert. Das andere der beiden Bauteile ist die Hauptspindel.

Das Schraubgetriebe wirkt wie eine Begrenzungseinrichtung, welche die bei der Bearbeitung entstehenden axialen und tangentialen Kräfte und die Drehmomente wirksam begrenzt. Die Erfindung beruht auf der Erkenntnis, dass die Begrenzung dieser Kräfte und Drehmomente mit Hilfe von Sensoren nicht nur sehr aufwendig ist, sondern auf diesem Wege Beschädigungen am Werkstück und am Werkzeug und andere Qualitätsmängel aufgrund der unvermeidlichen Trägheit der eingesetzten Regelungen nicht zuverlässig verhindert werden können. Erhöht sich beispielsweise kurzzeitig aufgrund einer Inhomogenität im Werkstück das Drehmoment, so bewirken sensorbasierte Regelungssysteme eine Reduzierung der Leistung des Antriebs für die Hauptspindel. Aufgrund der Trägheit der Hauptspindel fällt das Drehmoment aber nicht sofort ab, sondern wirkt noch über einen kurzen Zeitraum nach, der aber genügt, um Schäden am Werkstück oder am Werkzeug hervorzurufen. Sicherheitskupplungen können die auftretenden Drehmomente zwar wirksam begrenzen. Das Auslösen einer Sicherheitskupplung kann Schäden am Werkstück oder am Werkzeug verhindern, unterbricht jedoch den Bearbeitungsvorgang und trägt deswegen nur wenig zu einem besseren Bearbeitungsergebnis bei.

Ein Schraubgetriebe beruht bekanntlich auf dem Prinzip der schiefen Ebene. Schraubt man eine Maschinenschraube von unten in eine Schraubenmutter, so kann man die Schraube in Drehung versetzen, wenn man die Schraubenmutter um die Symmetrieachse der Schraube herum entgegen der Steigung des Schraubengewindes in Drehung versetzt. Die Mutter "schiebt" dann über das ansteigende Gewinde die Schraube an. Erschwert man die Drehung der Schraube durch Erhöhung eines Widerstands, so wird ab einer gewissen Kombination aus axialer Widerstandskraft und Widerstandsmoment die Schraube in die Mutter hineingezogen.

Nach dem gleichen Prinzip funktioniert das Schraubgetriebe der erfindungsgemäßen Werkzeugmaschine. Durch die Vorschubeinrichtung lässt sich allerdings zusätzlich eine entlang der Drehachse wirkende axiale Kraft erzeugen, wodurch bei Drehung der Mutter im oben genannten Beispiel nicht nur die Schraube in Drehung versetzt wird, sondern sich die Schraube zusätzlich aus der Mutter herausdreht, wenn die Mutter in Drehung versetzt wird. Setzt das Werkstück dem Werkzeug beim Eindringen einen großen Widerstand entgegen, so zieht sich die Hauptspindel mit dem daran befestigten Werkzeug praktisch verzögerungsfrei selbsttätig aus dem Werkstück zurück und verlässt auf diese Weise die Zerspanzone, in der es zu Beschädigungen am Werkstück oder Werkzeug kommen kann. Dadurch verringert sich sofort der Widerstand, den das Werkstück auf das Werkzeug ausübt. Die Hauptspindel mit dem daran befestigten Werkzeug ändert dadurch rasch wieder seine Bewegungsrichtung und bewegt sich wieder zum Werkstück hin. Wenn bei der Bearbeitung größere Widerstände auftreten, vollführt die Hauptspindel somit axiale Oszillationen, die sich als vorteilhaft für das Bearbeitungsergebnis und insbesondere für die Phase erwiesen haben, in denen das Werkzeug in das Werkstück eindringt oder aus diesem austritt.

Bei welchem Widerstand sich das Werkzeug aus dem Werkstück zurückzieht, lässt sich durch die entlang der Drehachse wirkende Kraft einstellen, die von der Vorschubeinrichtung erzeugt wird. Je größer diese Kraft ist, desto größer muss der Widerstand sein, den das Werkzeug im Werkstück erfährt, um ein Herausziehen des Werkzeugs aus dem Werkstück mit Hilfe des Schraubgetriebes zu bewirken. Im Allgemeinen wird die von der Vorschubeinrichtung erzeugte axiale Kraft deswegen an den konkreten Bearbeitungsvorgang anzupassen sein. Im Prinzip wäre es auch möglich, alternativ oder zusätzlich das vom Antrieb bereitgestellte Drehmoment an die konkrete Bearbeitungsaufgabe oder die momentane Bearbeitungsphase des Bohrvorgangs anzupassen. Da das Drehmoment der typischerweise eingesetzten Elektromotoren häufig annähernd proportional zum Strom ist, lässt sich das Drehmoment über eine geeignete Stromsteuerung relativ gut festlegen. Im Allgemeinen werden die Antriebe allerdings so gesteuert, dass eine vorgegebene Drehzahl erreicht werden soll, da diese ebenfalls für das Bearbeitungsergebnis bedeutsam ist. Bevorzugt ist es deswegen, wenn als veränderlicher und an die konkrete Bearbeitungsaufgabe anzupassender Parameter lediglich die axiale Kraft verwendet wird, die von der Vorschubeinrichtung ausgeübt wird.

Die Richtung der axialen Bewegung der Hauptspindel entlang der Drehachse hängt vor allem ab von der Größe der von der Vorschubeinrichtung erzeugten Kraft, dem vom Antrieb erzeugten Drehmoment, der entlang der Drehachse wirkenden Widerstandskraft, die ein in die Werkzeugaufnahme aufgenommenes Werkzeug im Werkstück erfährt, und dem Widerstandsmoment, welches das Werkzeug bezüglich einer Drehung um die Drehachse im Werkstück erfährt.

Versuche mit der erfindungsgemäßen Werkzeugmaschine haben ergeben, dass sich hervorragende Bearbeitungsergebnisse selbst bei schwierigsten Bohraufgaben, zum Beispiel das Anbringen feiner Bohrungen in dünnen geneigten Glasplatten, erzielen lassen, ohne dass es zu den sonst auftretenden Schwierigkeiten wie Ausbrechungen, Brüchen oder anderen Beschädigungen von Werkstück und Werkzeug kommt.

Im Prinzip kann das Schraubgetriebe wie ein herkömmlicher Spindel-Gewinde-Trieb ausgebildet sein. In diesem Fall kann die Hauptspindel ein Außengewinde tragen, das eine Hülse mit einem entsprechenden Innengewinde trägt. Die Hülse ist axial fixiert und um die Drehachse drehbar und wird von einem Antrieb der Werkzeugmaschine über das Antriebsgetriebe in eine Drehung um die Drehachse der Hauptspindel versetzt. Zur Verringerung der Reibung zwischen den Getriebeteilen kann anstelle eines einfachen Spindel-Gewinde-Triebs auch ein Kugelgewindetrieb eingesetzt werden.

Es hat sich allerdings gezeigt, dass die Gewinde von herkömmlichen Spindel-Gewinde-Trieben den großen Belastungen, die bei der Bearbeitung mit Hilfe von Werkzeugmaschinen auftreten, dauerhaft nicht ohne weiteres standhalten. Bevorzugt wird deswegen ein robusteres Schraubgetriebe eingesetzt, bei dem das erste Bauteil eine Hülse aufweist, deren Wandung innenseitig eine schraubenförmige Ausnehmung aufweist, die von zwei vorzugsweise zueinander parallelen schraubenförmigen Flächen begrenzt ist. In diese Ausnehmung kann entweder ein Mitnehmer in Form eines als komplementär geformten Gegenstücks eingreifen, das am zweiten Bauteil ausgebildet ist. Vorzugsweise jedoch weist der am zweiten Bauteil ausgebildete Mitnehmer einen radial vorspringenden Zapfen auf, der in die schraubenförmige Ausnehmung eingreift. Der Zapfen ist mit geringem Spiel in der Ausnehmung geführt, so dass er je nach axialer Bewegungsrichtung der Hauptspindel an einer der beiden schraubenförmigen Flächen anliegt. Die vom Antrieb über das Antriebsgetriebe in Drehung versetzte Hülse überträgt dann mit einer der beiden schraubenförmigen Flächen die für die Bearbeitung erforderlichen Kräfte und Drehmomente auf den Zapfen und somit auf die Hauptspindel.

Anstelle einer Ausnehmung kann die Hülse auch einen Durchbruch aufweisen.

Zur Verringerung der Reibung zwischen dem Zapfen und den schraubenförmigen Flächen kann der Zapfen eine Rolle tragen, die an einer der schraubenförmigen Flächen angreift. Anstelle der Rollen können auch Gleitschuhe eingesetzt werden.

Aus Symmetriegründen weist das zweite Bauteil vorzugsweise nicht nur einen, sondern zwei oder mehr radial vorspringende Zapfen auf. Wenn zwei Zapfen einander diametral gegenüberliegen, muss das am ersten Bauteil ausgebildete Gewinde mehrgängig sein. Die Zapfen können aber auch in axialer Richtung voneinander beabstandet angeordnet sein, ohne dass dies zu nicht beherrschbaren Lagerbelastungen aufgrund der ungleichen Fliehkräfte führt.

In den meisten Fällen wird es am günstigsten sein, wenn das Gewinde nicht an der Hauptspindel, sondern an dem anderen Bauteil ausgebildet ist. Im Prinzip kommt aber auch in Betracht, über das Antriebsgewinde ein Bauteil anzutreiben, das über den Mitnehmer die mit einem Außengewinde versehene Hauptspindel mitnimmt.

Bei einem Ausführungsbeispiel ist die Vorschubeinrichtung elektromagnetisch und weist einen gehäusefest angeordneten Stator und einen entlang der Drehachse beweglich gelagerten Läufer auf, der seine axialen Bewegungen auf die Hauptspindel überträgt.

Der Läufer kann dabei durch einen ersten Elektromagneten in einer axialen Ruheposition positionierbar sein. Im Stator ist ein zweiter Elektromagnet angeordnet, mit dem eine zur Werkstückaufnahme gerichtete Vorschubkraft erzeugbar ist. Eine derart ausgebildete Vorschubeinrichtung ist vorteilhaft, weil der erste Elektromagnet die Gewichtskraft der Hauptspindel und des daran befestigten Werkzeugs trägt. Die Vorschubbewegung kann dann ausschließlich mit Hilfe des zweiten Elektromagneten gesteuert werden, ohne dass dieser hierzu umgepolt werden muss. Der erste Elektromagnet erzeugt bei diesem Ausführungsbeispiel eine Rückstellkraft, gegen deren Widerstand der zweite Elektromagnet die Hauptspindel zum Werkstück hin drückt. Um die Hauptspindel wieder anzuheben, muss lediglich die vom zweiten Elektromagneten aufgebrachte und zum Werkstück wirkende Kraft so weit verringert werden, dass die vom ersten Elektromagneten erzeugte Rückstellkraft überwiegt.

Die Elektromagneten können dabei mehrere Abschnitte umfassen, die von unabhängigen Stromquellen gespeist werden. Dadurch lässt sich die Vorschubkraft noch genauer einstellen.

Die Wicklungen der Elektromagneten können z.B. aus Kupfer, Aluminium oder Legierungen bestehen, die mindestens eines dieser Metalle enthalten.

Der Vorteil, dass beim Richtungswechsel nicht umgepolt werden muss und damit Hystereseverlusten vermieden werden, ist vor allem dann bedeutsam, wenn die Werkzeugmaschine eine manuelle oder programmierbare Steuereinrichtung aufweist, die dazu eingerichtet ist, die Vorschubeinrichtung so zu steuern, dass zumindest in einem Zeitraum nach dem Eindringen des Werkzeugs in das Werkstück das Werkzeug mit einer Vorschubbewegung in das Werkstück vorrückt, der Oszillationen überlagert sind. Um derartige Oszillationen zu erzeugen, muss bei herkömmlichen elektromagnetisch betätigten Vorschubeinrichtungen der Elektromagnet mit der Frequenz der gewünschten Oszillation umgepolt werden, was unvermeidlich zu Hystereseverlusten, zu Veränderungen der Vorschubkraft und dadurch zu unnötigem Energieverbrauch und zu unerwünschter Wärmeentwicklung führt.

Anstelle einer elektromagnetischen Vorschubeinrichtung kann auch eine hydraulische oder schraubenartige Vorschubeinrichtung verwendet werden. Mit elektromagnetischen Vorschubeinrichtungen lässt sich der Vorschub jedoch besonders präzise steuern.

Hinsichtlich des Verfahrens wird die oben formulierte Aufgabe durch ein Verfahren zur spanenden Bearbeitung von Werkstücken gelöst, das die folgenden Schritte umfasst:
a) Antreiben einer Hauptspindel, die endseitig eine Werkzeugaufnahme mit einem darin eingesetzten Werkzeug trägt, so dass sich die Hauptspindel um eine Drehachse dreht;
b) Ausüben einer entlang der Drehachse wirkenden Kraft auf die Hauptspindel mit Hilfe einer Vorschubeinrichtung.

Erfindungsgemäß wird die Hauptspindel mit Hilfe eines Schraubgetriebes, das einen Antrieb mit der Hauptspindel verbindet, in Drehung versetzt und gleichzeitig entlang der Drehachse bewegt.

Bezüglich der mit dem erfindungsgemäßen Verfahren verbundenen Vorteile und der weiteren vorteilhaften Ausgestaltung des Verfahrens wird auf die vorstehenden Ausführungen zur Werkzeugmaschine verwiesen, die entsprechend gelten.

### KURZE BESCHREIBUNG DER ZEICHNUNGEN

Nachfolgend wird ein Ausführungsbeispiel der Erfindung anhand der Zeichnungen näher erläutert. In diesen zeigen:
- Figur 1a:: einen schematischen axialen Schnitt durch wesentliche Teile einer Werkzeugmaschine gemäß einem Ausführungsbeispiel der Erfindung in einer ersten Vorschubstellung der Hauptspindel vor dem Beginn der Bearbeitung;
- Figur 1b:: einen schematischen axialen Schnitt gemäß der Figur 1a, wobei sich die Hauptspindel jedoch in einer zweiten Vorschubstellung während der Bearbeitung befindet;
- Figur 2:: eine perspektivische Darstellung eines Abschnitts der Hauptspindel der in den Figuren 1a und 1b gezeigten Werkzeugmaschine;
- Figur 3:: eine perspektivische Darstellung des Schraubgetriebes der in den Figuren 1a und 1b gezeigten Werkzeugmaschine;
- Figur 4:: einen Querschnitt durch das in der Figur 3 gezeigte Schraubgetriebe;
- Figuren 5a und 5b:: schematische Darstellungen einer schiefen Ebene zur Erläuterung des Funktionsprinzips des Schraubgetriebes;
- Figur 6:: ein Strom-Zeit-Diagramm zur Erläuterung einer möglichen Ansteuerung der elektromagnetischen Vorschubeinrichtung.

### BESCHREIBUNG BEVORZUGTER AUSFÜHRUNGSBEISPIELE

### 1. Konstruktiver Aufbau

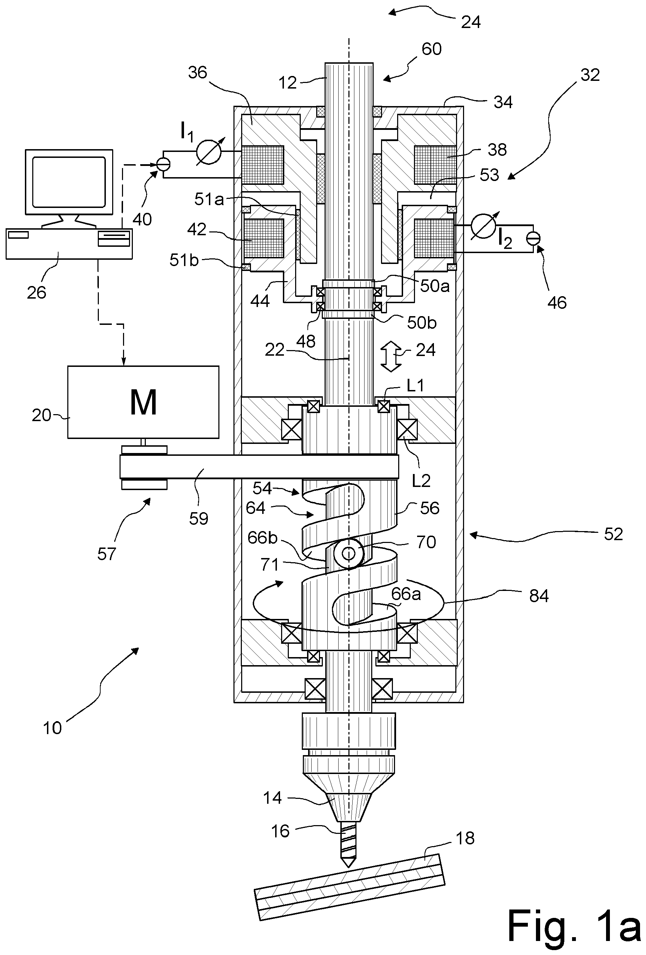

Die Figur 1a zeigt in einem schematischen Schnitt wesentliche Teile eines Ausführungsbeispiels einer erfindungsgemäßen und insgesamt mit 10 bezeichneten Werkzeugmaschine.

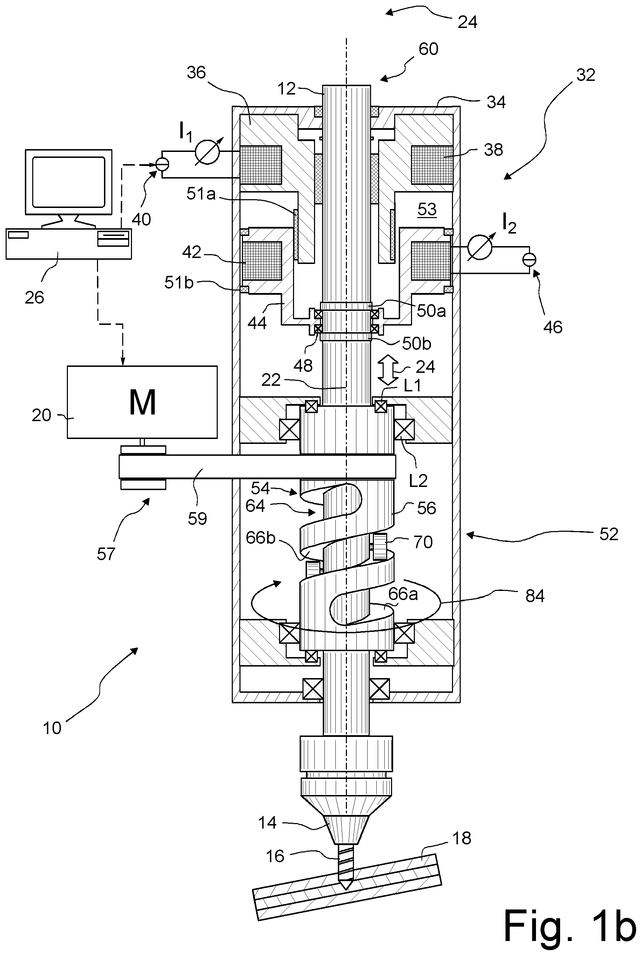

Die Werkzeugmaschine 10 weist eine Hauptspindel 12 auf, die endseitig eine Werkzeugaufnahme 14 trägt. In die Werkzeugaufnahme 14 kann in nicht näher dargestellter Weise ein Werkzeug 16 eingespannt werden, bei dem es sich im vorliegenden Ausführungsbeispiel um einen Spiralbohrer handelt. Anstelle eines Spiralbohrers kann beispielsweise auch ein Senker, eine Reibahle, ein Zylinderfräser, ein Diamantbohrer oder ein Sonderbohrwerkzeug an der Hauptspindel 12 befestigt werden, wie dies an sich im Stand der Technik bekannt ist. Ebenfalls in der Figur 1 dargestellt ist ein Werkstück 18, in welches das Werkzeug 16 eingedrungen ist. Bei dem Werkstück 18 handelt es sich hier um eine geneigt angeordnete Verbundplatte, die aus mehreren plattenartig ausgebildeten Werkstoffen besteht.

Die Hauptspindel 12 ist so gelagert, dass sie um eine Drehachse 22 drehbar und außerdem entlang der Drehachse 22 beweglich ist, wie dies durch einen Doppelpfeil 24 angedeutet ist. Die durch den Doppelpfeil 24 angedeutete Richtung wird im Folgenden als Vorschubrichtung bezeichnet.

Um die Hauptspindel 12 entlang der Vorschubrichtung 24 zu bewegen, weist die Werkzeugmaschine 10 eine Vorschubeinrichtung 32 auf, deren Aufbau in der Figur 1a vereinfacht dargestellt ist. Die Vorschubeinrichtung 32 ist in einem Gehäuse 34 der Werkzeugmaschine aufgenommen und umfasst einen Stator 36 mit einer Statorwicklung 38, die mit einer regelbaren Stromquelle 40 verbunden ist. Diese wird ihrerseits von einer Steuerungseinrichtung 26 angesteuert, die in der Figur 1a als Personalcomputer (PC) angedeutet ist. Außerdem umfasst die Vorschubeinrichtung 32 eine Läuferwicklung 42, die in einem axial beweglich gelagerten Läufer 44 aufgenommen ist. Die Läuferwicklung 42 ist im dargestellten Ausführungsbeispiel an eine Konstantstromquelle 46 angeschlossen und erzeugt daher ein zeitlich konstantes Magnetfeld, dessen Stärke von dem von der Konstantstromquelle 46 erzeugten Strom I₂ abhängt. Der Läufer 44 greift über Kugellager 48 an zwei radial von der Hauptspindel 12 vorspringenden Kragen 50a, 50b an, wodurch die Hauptspindel 12 axiale Bewegungen des Läufers 44 mitvollzieht. Die Kugellager 48 entkoppeln die Drehbewegung der Hauptspindel 12 vom Läufer 44, der deswegen nur Bewegungen in axialer Richtung ausführt, aber nicht gedreht wird. In axialer Richtung wird der Läufer 44 von Gleitlagern 51a, 51b gegenüber dem Stator 36 bzw. dem Gehäuse 34 geführt. Die Bewegungen des Läufers 44 und der davon mitgeführten Hauptspindel 12 sind in der Figur 1b erkennbar, in der die Werkzeugmaschine 12 nach einem Absenken der Hauptspindel 12 gezeigt ist.

Der Stator 36 und das Gehäuse 34 bestehen zumindest teilweise aus einem Material, das den magnetischen Fluss gut leitet. Geeignet sind beispielsweise eisen- und/oder nickelhaltige Legierungen wie PERMENORM 5000 H3 oder andere weichmagnetische Materialien, z.B. Stahl C10 oder Stahl C15 mit niedrigen Kohlenstoffgehalt.

Beim Betrieb der Werkzeugmaschinen erzeugt die Läuferwicklung 42 einen magnetischen Fluss im Kern des Stators 36, der einen zwischen dem Stator 36 und dem Läufer 44 verbleibenden Luftspalt 53 überbrücken muss. Der magnetische Fluss tritt durch die Grenzflächen am Luftspalt 53 hindurch und erzeugt eine anziehende Reluktanzkraft, die den Luftspalt 53 verkleinern möchte. Die Reluktanzkraft ist so groß, dass sie das Eigengewicht der Hauptspindel, der Werkzeugaufnahme 14 und des daran befestigten Werkzeugs 16 zu tragen vermag. Dies gilt auch dann, wenn sich der Luftspalt 53 durch Absenken des Läufers 44 vergrößert und dadurch die Reluktanzkraft abnimmt. Die von der Konstantstromquelle 46 gespeiste Läuferwicklung 42 hat somit gemeinsam mit den einen hohen magnetischen Fluss gewährleistenden umgebenden Materialien eine Art umgekehrte Federwirkung, bei der die Rückstellkraft mit zunehmendem Stellweg im Gegensatz zu einer Feder nicht größer, sondern kleiner wird.

Um den Läufer 44 zusammen mit der Hauptspindel 12 entgegen der von der Läuferwicklung 42 erzeugten Reluktanzkraft abzusenken, wird die Statorwicklung 38 mit Hilfe der regelbaren Stromquelle 40 mit einem Strom I₁ beaufschlagt, der in der Statorwicklung 38 ein Magnetfeld erzeugt, welches dem von der Läuferwicklung 42 erzeugten Magnetfeld entgegengerichtet ist. Dadurch entsteht eine abstoßende und nach unten wirkende Kraft, die mit zunehmendem Strom I₁ größer wird. Soll die Hauptspindel 12 wieder angehoben werden, so wird der Strom I₁ verringert, wodurch die abstoßende Wirkung zwischen den beiden durch die Statorwicklung 38 und die Läuferwicklung 42 realisierten Elektromagneten abnimmt. Auf diese Weise kann die Hauptspindel 12 entlang der Vorschubrichtung 24 abgesenkt und angehoben werden, ohne dass hierzu ein Elektromagnet umgepolt werden muss. Eine unerwünschte Wärmeentwicklung durch Hystereseverluste, die durch Ummagnetisierungen entstehen, lassen sich auf diese Weise vermeiden.

Prinzipiell lässt sich auf diese Weise praktisch jede beliebige Trajektorie der Hauptspindel 12 entlang der Vorschubrichtung 24 erzeugen. Auch komplizierte Bewegungsabläufe, zum Beispiel die Überlagerung einer konstanten axialen Beschleunigung mit einer Oszillationsbewegung, sind möglich. Die tatsächliche Trajektorie hängt dabei nach dem Eindringen des Werkzeugs 16 in das Werkstück 18 natürlich auch von dessen Eigenschaften ab.

Ein als Elektromotor realisierter Antrieb 20 zum Antreiben der Hauptspindel 12 um die Drehachse 22 ist über ein Antriebsgetriebe 57 und ein Schraubgetriebe 52 mit der Hauptspindel 12 verbunden. Das Schraubgetriebe 52 umfasst ein erstes Bauteil 54, das eine hohlzylindrische Hülse 56 aufweist. Das erste Bauteil 54 ist um die Drehachse 22 drehbar und axial unbeweglich mit Hilfe von Lagern L1, L2 im Gehäuse 34 angeordnet und umschließt die axialbeweglich geführte Hauptspindel 12. Die Hülse 56 wird beim Betrieb der Werkzeugmaschine 10 über das Antriebsgetriebe 57 vom Antrieb 20 in Drehung versetzt. Im dargestellten Ausführungsbeispiel ist das Antriebsgetriebe 57 als Riemenantrieb mit einem umlaufenden Riemen 59 ausgebildet. Selbstverständlich können auch Zahnradgetriebe oder andere formschlüssige Getriebe als Antriebsgetriebe 57 verwendet werden.

Die Hülse 56 hat eine Wandung mit einem schraubenförmigen Durchbruch 64, der von einer unteren schraubenförmigen Fläche 66a und einer oberen schraubenförmigen Fläche 66b begrenzt ist. Die Hülse 56 ähnelt somit einer Schraube, deren Kern entfernt wurde und die deswegen nur aus dem eigentlichen Gewinde besteht.

Zum Schraubgetriebe 56 gehört außerdem als zweites Bauteil die Hauptspindel 12, an der zwei Mitnehmen 70 ausgebildet sind, die mit dem an dem ersten Bauteil 54 ausgebildeten Gewinde zusammenwirkt. Die Mitnehmer 70a, 70b, von denen in der Figur 1a nur der nach vorne weisende Mitnehmer 70a erkennbar ist, ragen radial von der Hauptspindel 12 ab und greifen in den schraubenförmigen Durchbruch 64 der Hülse 56 ein.

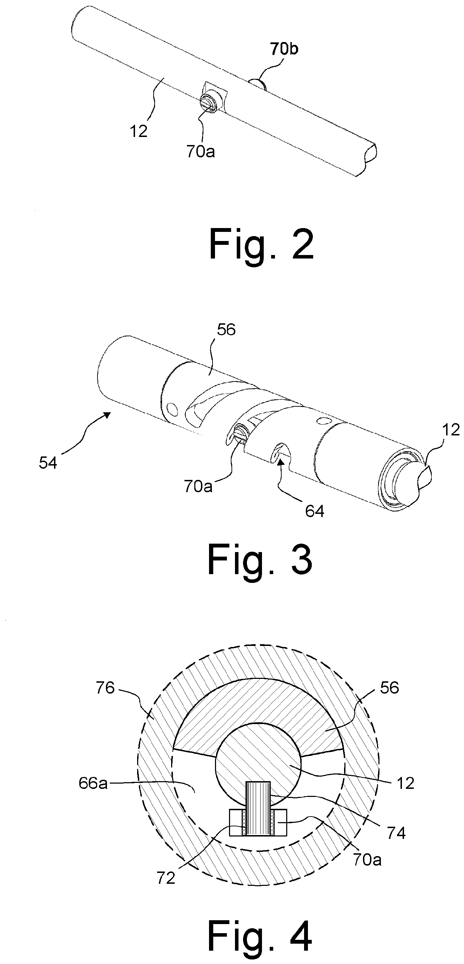

Die Figur 2 zeigt den unteren Abschnitt der Hauptspindel 12 in einer perspektivischen Darstellung, in der die beiden radial vorspringenden und in axialer Richtung versetzt zueinander angeordneten Mitnehmer 70a, 70b gut zu erkennen sind. Die Figur 3 zeigt das Schraubgetriebe 52 in einer perspektivischen Darstellung im montierten Zustand.

Im Querschnitt der Figur 4 durch die Hauptspindel 12 auf der Höhe des Mitnehmers 70a ist erkennbar, dass der Mitnehmer 70a durch eine Rolle gebildet wird, die über ein Gleitlager 72 auf einen Zapfen 74 aufgesteckt ist, der in eine radial verlaufende Bohrung 74 in der Hauptspindel 12 eingepresst ist. Die Mitnehmer 70a, 70b können dadurch je nach axialer Belastung entweder auf der unteren schraubenförmigen Fläche 66a oder der oberen schraubenförmigen Fläche 66b der Hülse 56 reibungsarm ablaufen.

In der Figur 4 ist durch gestrichelte Linien eine optionale Außenhülse 76 angedeutet, die die Hülse 56 vollständig umschließt und deren Wandung keine Durchbrüche hat. Eine solche Außenhülse 76 kann zweckmäßig sein, um die schraubenförmigen Flächen 66a, 66b und die Mitnehmer 70a, 70b vor Verschmutzung zu schütze und die Stabilität des ersten Bauteils 54 zu erhöhen.

### 2. Funktion des Schraubgetriebes

Wenn das erste Bauteil 54 um die Längsachse 22 rotiert, überträgt sich die Rotation über die Mitnehmer 70a, 70b auf die Hauptspindel 12. Die Hauptspindel 12 kann aber auch entlang der Vorschubrichtung 24 axiale Bewegungen relativ zum ersten Bauteil 54 ausführen, wenn die Mitnehmer 70a, 70b im schraubenförmigen Durchbruch 64 ablaufen. Bei entsprechender Auslegung des Schraubgetriebes 52 können diese axialen Bewegungen der Hauptspindel 12 dazu genutzt werden, das Werkzeug 16 aus dem Werkstück 18 herauszuziehen, wenn der Widerstand zwischen dem Werkzeug 16 und dem Werkstück 18 zu groß wird.

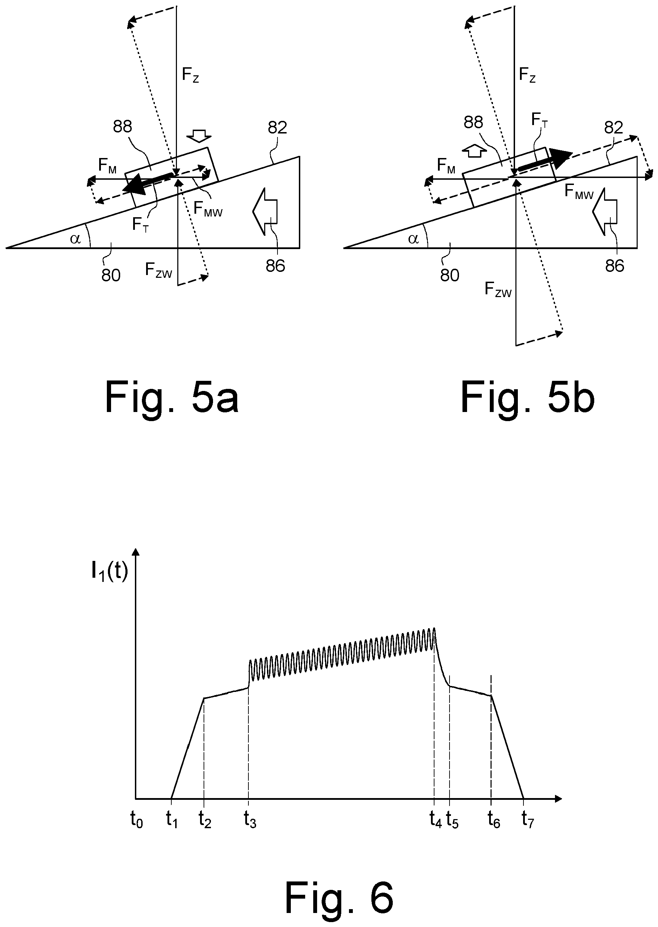

Dies wird im Folgenden anhand der Figuren 5a und 5b erläutert. Die Wirkung des Schraubgetriebes 52 beruht auf dem Prinzip der schiefen Ebene. In der Figur 5a dargestellt ist ein Keil 80, der eine schiefe Ebene 82 definiert und den man sich als Ausschnitt aus der Hülse 56 des ersten Bauteils 54 vorstellen kann. Wenn die Hülse 56 durch den Antrieb 20 in die in der Figur 1a durch einen Pfeil 84 angedeutete Drehrichtung gedreht wird, entspricht dies einer Bewegung des Keils 80 in der durch einen Pfeil 86 in der Figur 5a gezeigten Richtung. Einer der Mitnehmer 70a, 70b ist in der schematischen Darstellung der Figur 5a durch einen Quader 88 dargestellt, der auf der schiefen Ebene 82 aufliegt. Im Folgenden wird unterstellt, dass die Reibung zwischen dem Quader 88 und der schiefen Ebene 82 vernachlässigt werden kann.

Auf den einen der Mitnehmer 70a, 70b repräsentierenden Quader 88 wirkt zum einen eine senkrecht nach unten wirkende Kraft Fz, die eine Summe aller entlang der Drehachse 22 nach unten (d.h. zum Werkstück 18 hin) wirkenden Kräfte darstellt. Zu dieser Kraft trägt insbesondere die Gewichtskraft der Hauptspindel und der daran befestigten Teile (Läufer 44, Werkzeugaufnahme 14 und Werkzeug 16) sowie die von der Vorschubeinrichtung 32 erzeugte Kraft entlang der Vorschubrichtung 24 bei.

Gleichzeitig wirkt in der entgegengesetzten Richtung eine Kraft Fzw auf die Mitnehmer 70a, 70b bzw. den Quader 88 in der Figur 5a, die durch den Widerstand des Werkzeugs 16 im Werkstück 18 verursacht wird.

Auf die Mitnehmer 70a, 70b bzw. den Quader 88 in der Figur 5a wirken außerdem Drehmomente ein, die sich unter Berücksichtigung des Hebelarms in eine tangential (also in Umfangsrichtung) wirkende Kraftkomponente umrechnen lassen. Eine Kraftkomponente F_{M} wird durch den Motor 20 erzeugt, dessen Drehmoment über das Antriebsgetriebe 57 und die Hülse 56 auf die Mitnehmer 70a, 70b bzw. den Quader 88 in der Figur 5a einwirkt. In die entgegengesetzte Richtung wirkt eine tangentiale Kraftkomponente F_{MW}, die auf ein Widerstandsmoment zurückgeht, welches das Werkstück 18 dem Werkzeug 16 bei dessen Drehung um die Drehachse 22 entgegensetzt.

Betrachtet man die entlang der schiefen Ebene 82 wirkenden Komponenten der vorgenannten Kräfte, wie sie in der Figur 5a durch gestrichelte Pfeile angedeutet sind, und summiert diese Komponenten auf, so ergibt sich eine resultierende Kraft F_{T}, die bei dem in der Figur 5a gezeigten Beispielfall schräg abwärts zeigt. Bei dieser Konstellation wirkt somit eine Kraft auf den Quader 88, die ihn auf der schiefen Ebene 82 nach unten gleiten lässt. Übertragen auf das Schraubgetriebe 52 bedeutet dies, dass die Mitnehmer 70a, 70b auf der unteren Schraubenfläche 66a abwärts ablaufen, wodurch sich die Hauptspindel 12 nach unten absenkt. Überlagert ist diese Abwärtsbewegung durch die gleichzeitig stattfindende Rotation der Hauptspindel 12 um die Drehachse 22, da ja auch der Quader 88 in der Figur 5a von der sich entlang des Pfeils 86 bewegenden schiefen Ebene 82 mitgeführt wird.

Die Figur 5b zeigt die vorstehend diskutierten Kräfte schematisch für eine andere Konstellation. Hier wurde unterstellt, dass die axiale Widerstandskraft Fzw deutlich zugenommen hat, zum Beispiel weil das Werkstück 18 besonders hart ist. Damit einher geht in der Regel auch ein größeres Widerstandsmoment und damit eine größere Kraft F_{MW}, die der durch den Antrieb verursachten Kraft F_{M} entgegengesetzt ist. Bei der in der Figur 5b gezeigten Konstellation heben sich die axialen Kraftkomponenten annähernd auf. Die durch das Widerstandsmoment bewirkte Kraft F_{MW} ist allerdings deutlich größer als die durch den Antrieb erzeugte Kraft F_{M}, wodurch die resultierende Kraft F_{T} nun schräg aufwärts verläuft.

Folglich bewegt sich der Quader 88 nun die schiefe Ebene 82 hinauf. Übertragen auf das Schraubgetriebe 52 bedeutet dies, dass die Mitnehmer 70a, 70b im schraubenförmigen Durchbruch 64 nach oben wandern, was zu einer Aufwärtsbewegung der Hauptspindel 12 führt. Erfährt also das Werkzeug 16 im Werkstück 18 einen großen Widerstand, so zieht sich die Hauptspindel 12 selbsttätig aus dem Werkstück 18 zurück, bis der Widerstand im Werkstück 18 sich wieder so weit verringert hat, dass die in der Figur 5a gezeigte Konstellation vorliegt und die Hauptspindel 12 wieder in eine Abwärtsbewegung gezwungen wird.

In der Regel wiederholen sich diese Abwärts- und Aufwärtsbewegungen der Hauptspindel 12 während des gesamten Bearbeitungsvorgangs, wodurch das Werkzeug 16 nicht mit gleichmäßiger Vorschubgeschwindigkeit, sondern mit einer überlagerten Oszillation in das Werkstück 18 eindringt. Eine solche Oszillation hat sich als sehr günstig für das Bearbeitungsergebnis und die Prozessqualität herausgestellt.

Vor allem jedoch stellt das Schraubgetriebe 52 sicher, dass der Widerstand, den das Werkzeug im Werkstück 18 erfährt, ein vorgegebenes Maß nicht überschreiten kann, da die Werkzeugmaschine 10 das Werkzeug 16 sofort selbsttätig aus der Zerspanzone herauszieht. Diese Reaktion erfolgt augenblicklich und erfordert nicht die Mitwirkung von Sensoren oder Regelungskreisen, wie dies im Stand der Technik bekannt ist.

Der Widerstand, dessen Überschreitung zum Anheben der Hauptspindel 12 führt, setzt sich dabei aus dem Widerstand in axialer Richtung (Fzw) und dem Widerstand (F_{MW}) zusammen, den das Werkstück 18 der Drehung des Werkzeugs 16 entgegensetzt. Zu einem Anheben kommt es deswegen auch dann, wenn beispielsweise nur die axiale Widerstandskraft Fzw so weit ansteigt, dass die resultierende Kraft F_{T} zu einer Aufwärtsbewegung führt. Ob das Widerstandsmoment über die Kraft F_{MW} oder die axiale Kraft Fzw den überwiegenden Einfluss hat, hängt von der Steigung des von dem Durchbruch 64 gebildeten Gewindes in der Hülse 56 ab. Diese Steigung entspricht dem Winkel α des Keils 80, der für die entlang der schiefen Ebene 82 wirkenden Kraftkomponenten maßgeblich ist. Ist der Winkel α und damit die Steigung des Schraubgetriebes 52 klein, tritt der Einfluss der axialen Kräfte zugunsten der Drehmomente zurück. Bei zunehmendem Winkel α vergrößert sich der Einfluss der axialen Kräfte auf das Verhalten des Schraubgetriebes 52. Der Winkel α ist dabei so zu wählen, dass eine Selbsthemmung vermieden wird.

Die auf den Motor 20 zurückgehende Kraft F_{M} lässt sich häufig nicht direkt beeinflussen, da die Regelung des Motors 20 in der Regel nicht auf die Erzeugung eines bestimmten Drehmoments, sondern einer bestimmten Drehzahl ausgerichtet ist. Im Allgemeinen verändert sich diese Kraft F_{M} während der Bearbeitung nicht wesentlich. Leicht beeinflussbar ist jedoch die axiale und nach unten wirkende Kraft Fz, die von der Vorschubeinrichtung 32 präzise eingestellt werden kann. Der von der regelbaren Stromquelle erzeugte Strom I₁ ist dabei annähernd proportional zur Kraft Fz und kann damit dazu verwendet werden, das Kräfteverhältnis festzulegen, ab dem eine Aufwärtsbewegung der Spindel 12 und damit eine kurzzeitige Unterbrechung der Bearbeitung ausgelöst wird.

Wie aus den Figuren 5a und 5b deutlich wird, erzeugt die abwärts wirkende Kraft Fz stets eine nach unten wirkende Komponente, die vom Widerstand des Werkzeugs 16 im Werkstück 18 überwunden werden muss, damit es zu einer Aufwärtsbewegung der Hauptspindel 12 kommt. Je größer also die nach unten gerichtete Kraft Fz ist, desto größer kann der Widerstand des Werkzeugs 16 im Werkstück 18 werden, bevor die Hauptspindel 12 sich in einer Art Ausweichbewegung nach oben bewegt. Bei empfindlichen Werkstücken 18 oder problematischen Bearbeitungssituationen, wie sie in den Figuren 1a und 1b durch die Schrägstellung des Werkstücks 18 angedeutet ist, empfiehlt es sich deswegen, die axiale Kraft Fz, die von der Vorschubeinrichtung 32 erzeugt wird, auf einen kleinen Wert zu begrenzen, um Schäden am Werkzeug 16 oder am Werkstück 18 zu verhindern.

### 3. Überlagerung zusätzlicher Oszillationen

Den vorstehend beschriebenen Oszillationen des Werkzeugs 16, die durch das Schraubgetriebe 52 bewirkt werden, können zusätzliche Oszillationen überlagert werden, die gezielt von der Vorschubeinrichtung 32 erzeugt werden.

Die Figur 6 zeigt beispielhaft eine mögliche Ansteuerung der Statorwicklung 38 durch die regelbare Stromquelle 40. Aufgetragen ist in dem Graphen der Figur 6 der durch die Statorwicklung 38 fließende Strom I₁ als Funktion der Zeit t.

Zwischen der Zeit t₀ und der Zeit t₁ fließt kein Strom durch die Statorwicklung 38. Der Läufer 44 und damit auch die Hauptspindel 12 befinden sich dadurch in einer oberen Ruhestellung, wie sie die Figur 1a zeigt.

Um das Werkzeug 16 in Richtung des Werkstücks 18 abzusenken, wird in einem Intervall zwischen den Zeiten t₁ und t₂ der Strom linear erhöht, was zu einem gleichmäßigen Absenken des Werkstücks 16 führt.

Kurz vor dem Auftreffen des Werkzeugs 16 auf das Werkstück 18 wird der Anstieg des Stromes I₁ verringert, damit das Werkzeug 16 mit möglichst geringer Vorschubkraft auf das Werkstück 18 auftrifft. Dadurch wird das Risiko, dass es beim Werkzeugeintritt zu den eingangs erwähnten Problemen wie Kantenbruch, Delamination oder Werkzeugbruch kommt, erheblich verringert. Sobald das Werkzeug 16 in das Werkstück 18 eingedrungen ist (Zeitpunkt ts), steigt der Strom I₁ an. Gleichzeitig wird dem Strom I₁ eine Oszillation überlagert, die zu zusätzlichen axialen Aufwärts- und Abwärtsbewegungen des Werkzeugs 16 während des Bearbeitungsvorgangs führt.

Nach Beendigung des oszillierenden Vorschubs zum Zeitpunkt t₄ wird der Strom in der Statorwicklung 38 rasch bis zum Zeitpunkt t₅ verringert, wodurch das Werkzeug 16 schnell angehoben wird.. Kurz bevor das Werkzeug 16 aus dem Werkstück 18 austritt (Zeitpunkt ts), wird die Vorschubkraft und damit die Geschwindigkeit entlang der Vorschubrichtung 24 weiter verringert, damit das Werkzeug 16 beim Austritt aus dem Werkstück 18 keine Schäden an der Oberfläche des Werkstücks 18 hervorruft. Sobald zum Zeitpunkt t₆ das Werkzeug 16 das Werkstück 18 nicht mehr berührt, wird das Werkzeug 16 rasch vom Werkstück 18 entfernt, bis zum Zeitpunkt t₇ die Ausgangslage wieder erreicht wurde.

## Patentansprüche

1. Werkzeugmaschine (10) zur spanenden Bearbeitung von Werkstücken (18), mit:
einer Hauptspindel (12), die endseitig eine Werkzeugaufnahme (14) trägt und so gelagert ist, dass sie um eine Drehachse (22) drehbar und entlang der Drehachse (22) beweglich ist,
einem Antrieb (20) zum Antreiben der Hauptspindel um die Drehachse (22), und mit einer vorzugsweise elektromagnetischen Vorschubeinrichtung (32), die dazu eingerichtet ist, auf die Hauptspindel (12) eine entlang der Drehachse wirkende Kraft (Fz) auszuüben,
**gekennzeichnet durch**
ein Schraubgetriebe (52), das den Antrieb (20) mit der Hauptspindel (12) verbindet und dazu eingerichtet ist, die Hauptspindel (12) in Drehung zu versetzen und gleichzeitig entlang der Drehachse (22) zu bewegen,
wobei das Schraubgetriebe (52) ein an einem ersten Bauteil (54) ausgebildetes Gewinde (64, 66a, 66b) und einen an einem zweiten Bauteil ausgebildeten Mitnehmer (70a, 70b) aufweist, der mit dem Gewinde (64, 66a, 66b) zusammenwirkt, und
wobei eines der beiden Bauteile (54) über ein Antriebsgetriebe (57) von dem Antrieb (20) in Drehung versetzbar und entlang der Drehachse (22) unbeweglich gelagert ist, und wobei das andere der beiden Bauteile die Hauptspindel (12) ist.

2. Werkzeugmaschine nach Anspruch 1, **dadurch gekennzeichnet, dass** die Richtung der Bewegung der Hauptspindel (12) entlang der Drehachse (22) unter anderem abhängig ist von der von der Vorschubeinrichtung (32) erzeugen Kraft (Fz), dem vom Antrieb (20) erzeugten Drehmoment, der entlang der Drehachse (22) wirkenden Widerstandskraft, die ein in die Werkzeugaufnahme (14) aufgenommenes Werkzeug (16) im Werkstück (18) erfährt, und dem Widerstandsmoment, welches das Werkzeug (16) bezüglich einer Drehung um die Drehachse (22) im Werkstück (18) erfährt.

3. Werkzeugmaschine nach Anspruch 1 oder 2, **dadurch gekennzeichnet, dass** das erste Bauteil (54) eine Hülse (56) aufweist, deren Wandung innenseitig eine schraubenförmige Ausnehmung aufweist, die von zwei schraubenförmigen Flächen begrenzt ist.

4. Werkzeugmaschine nach Anspruch 3, **dadurch gekennzeichnet, dass** der Mitnehmer (70a, 70b) einen radial vorspringender Zapfen (74) aufweist, der in die schraubenförmige Ausnehmung (64) eingreift.

5. Werkzeugmaschine nach Anspruch 1 oder 2, **dadurch gekennzeichnet, dass** das erste Bauteil eine Hülse (56) aufweist, deren Wandung einen schraubenförmigen Durchbruch (64) aufweist, der von zwei schraubenförmigen Flächen (66a, 66b) begrenzt ist.

6. Werkzeugmaschine nach Anspruch 5, **dadurch gekennzeichnet, dass** der Mitnehmer (70) einen radial vorspringender Zapfen (74) aufweist, der in den schraubenförmigen Durchbruch (64) eingreift.

7. Werkzeugmaschine nach Anspruch 4 oder 6, **dadurch gekennzeichnet, dass** der Zapfen (74) eine Rolle (70a) trägt, die an einer der schraubenförmigen Flächen (66a, 66b) angreift.

8. Werkzeugmaschine nach einem der Ansprüche 3 bis 7, **dadurch gekennzeichnet, dass** das zweite Bauteil zwei Mitnehmer (70a, 70b) aufweist, die gegenüberliegend von der Hauptspindel (12) in radialer Richtung vorspringen.

9. Werkzeugmaschine nach einem der vorhergehenden Ansprüche, **dadurch gekennzeichnet, dass** die Vorschubeinrichtung (32) einen gehäusefest angeordneten Stator (36) und einen entlang der Drehachse (22) axial beweglich gelagerten Läufer (44) aufweist, der seine axialen Bewegungen auf die Hauptspindel (12) überträgt.

10. Werkzeugmaschine nach Anspruch 9, **dadurch gekennzeichnet, dass** der Läufer (44) durch einen ersten Elektromagneten (42) in einer axialen Ruheposition positionierbar ist, und dass im Stator (36) ein zweiter Elektromagnet (38) angeordnet ist, mit dem eine zur Werkstückaufnahme (14) gerichtete Vorschubkraft erzeugbar ist.

11. Werkzeugmaschine nach einem der vorhergehenden Ansprüche, **gekennzeichnet durch** eine Steuereinrichtung (26), die dazu eingerichtet ist, die Vorschubeinrichtung (32) so zu steuern, dass zumindest in einem Zeitraum nach dem Eindringen des Werkzeugs (16) in das Werkstück (18) das Werkzeug (16) mit einer Vorschubbewegung in das Werkstück (18) vorrückt, der Oszillationen überlagert sind.

12. Verfahren zur spanenden Bearbeitung von Werkstücken (18) mit folgenden Schritten:
a) Antreiben einer Hauptspindel (12), die endseitig eine Werkzeugaufnahme (14) mit einem darin eingesetzten Werkzeug (16) trägt, so dass sich die Hauptspindel (12) um eine Drehachse (22) dreht;
b) Ausüben einer entlang der Drehachse (22) wirkenden Kraft auf die Hauptspindel (12) mit Hilfe einer Vorschubeinrichtung (32);
**dadurch gekennzeichnet, dass**
die Hauptspindel (12) mit Hilfe eines Schraubgetriebes (52), das einen Antrieb (20) mit der Hauptspindel (12) verbindet, in Drehung versetzt und gleichzeitig entlang der Drehachse (22) bewegt wird.

13. Verfahren nach Anspruch 12,
**dadurch gekennzeichnet, dass** die Richtung der Bewegung parallel zur Drehachse (22) unter anderem abhängig ist von der von der Vorschubeinrichtung (32) erzeugen Kraft, einem von dem Antrieb (20) erzeugten Drehmoment, der entlang der Drehachse (22) wirkenden Widerstandskraft, die das Werkzeug (16) im Werkstück (18) erfährt, und dem Widerstandsmoment, welches das Werkzeug (16) bezüglich einer Drehung um die Drehachse (22) im Werkstück (18) erfährt.

## Claims

1. Machine tool (10) for machining workpieces (18), comprising:
a main spindle (12), which carries a tool holder (14) at its end and is mounted so as to be rotatable about an axis of rotation (22) and movable along the axis of rotation (22),
a drive (20) for driving the main spindle about the axis of rotation (22), and
a preferably electromagnetic feed device (32) configured to exert a force (FZ) acting along the axis of rotation on the main spindle (12),
**characterized by**
a screw-and-nut gearing (52) connecting the drive (20) to the main spindle (12) and configured to drive the main spindle (12) in rotation and simultaneously move it along the axis of rotation (22),
wherein the screw-and-nut gearing (52) comprises a thread (64, 66a, 66b) formed on a first component (54) and a cam (70a, 70b) formed on a second component and cooperating with the thread (64, 66a, 66b), and
wherein one of the two components (54) is rotatable by the drive (20) via a drive gear (57) and is immovably mounted along the axis of rotation (22), and wherein the other of the two components is the main spindle (12).

2. Machine tool according to claim 1, **characterized in that** the direction of movement of the main spindle (12) along the axis of rotation (22) depends, among other things, on the force (F_{Z}) generated by the feed device (32), the torque generated by the drive (20), the resistance force acting along the axis of rotation (22) which a tool (16) received in the tool holder (14) experiences in the workpiece (18), and the resistance torque which the tool (16) experiences in the workpiece (18) with respect to a rotation about the axis of rotation (22).

3. Machine tool according to claim 1 or 2, **characterized in that** the first component (54) has a sleeve (56), the wall of which has a helical recess on the inside, which is bounded by two helical surfaces.

4. Machine tool according to claim 3, **characterized in that** the cam (70a, 70b) has a radially projecting pin (74) which engages in the helical recess (64).

5. Machine tool according to claim 1 or 2, **characterized in that** the first component comprises a sleeve (56) whose wall comprises a helical aperture (64) delimited by two helical surfaces (66a, 66b).

6. Machine tool according to claim 5, **characterized in that** the cam (70) has a radially projecting pin (74) which engages in the helical aperture (64).

7. Machine tool according to claim 4 or 6, **characterized in that** said pin (74) carries a roller (70a) engaging one of said helical surfaces (66a, 66b).

8. Machine tool according to any one of claims 3 to 7, **characterized in that** the second component comprises two cams (70a, 70b) projecting opposite each other from the main spindle (12) in the radial direction.

9. Machine tool according to one of the preceding claims, **characterized in that** the feed device (32) has a stator (36) arranged fixed to the housing and a rotor (44) mounted so as to be axially movable along the axis of rotation (22) and transmitting its axial movements to the main spindle (12).

10. Machine tool according to claim 9, **characterized in that** the rotor (44) can be positioned in an axial rest position by means of a first electromagnet (42), and **in that** a second electromagnet (38) is arranged in the stator (36), with which a feed force directed towards the workpiece holder (14) can be generated.

11. Machine tool according to one of the preceding claims, **characterized by** a control device (26) which is configured to control the feed device (32) in such a way that, at least in a period of time after the tool (16) has penetrated the workpiece (18), the tool (16) advances into the workpiece (18) with a feed movement on which oscillations are superimposed.

12. Method for machining workpieces (18) comprising the following steps:
a) driving a main spindle (12), which carries at its end a tool holder (14) with a tool (16) inserted therein, so that the main spindle (12) rotates about an axis of rotation (22);
b) exerting a force acting along the axis of rotation (22) on the main spindle (12) with the aid of a feed device (32);
**characterized in that**
the main spindle (12) is set in rotation by means of a screw-and-nut gearing (52) connecting a drive (20) to the main spindle (12) and simultaneously moved along the axis of rotation (22).

13. The method of claim 12, **characterized in that** the direction of movement parallel to the axis of rotation (22) is dependent on, among other things, the force generated by the feed device (32), a torque generated by the drive (20), the resisting force acting along the axis of rotation (22) that the tool (16) experiences in the workpiece (18), and the resisting torque that the tool (16) experiences with respect to a rotation about the axis of rotation (22) in the workpiece (18).

## Revendications

1. Machine-outil (10) pour l'usinage par enlèvement de copeaux de pièces à usiner (18), avec :
une broche principale (12) qui porte côté extrémité un logement d'outil (14) et est logée de sorte qu'elle est rotative autour d'un axe de rotation (22) et mobile le long de l'axe de rotation (22),
un entraînement (20) pour l'entraînement de la broche principale autour de l'axe de rotation (22), et avec un dispositif d'avance (32) de préférence électromagnétique qui est configuré pour exercer une force (F_{Z}) agissant le long de l'axe de rotation sur la broche principale (12),
**caractérisée par**
un engrenage hélicoïdal (52) qui connecte l'entraînement (20) à la broche principale (12) et est configuré pour mettre en rotation et déplacer simultanément le long de l'axe de rotation (22) la broche principale (12),
dans laquelle l'engrenage hélicoïdal (52) présente un alésage (64, 66a, 66b) réalisé sur un premier composant (54) et un tenon d'entraînement (70a, 70b) réalisé sur un second composant qui coopère avec l'alésage (64, 66a, 66b), et
dans laquelle un des deux composants (54) peut être mis en rotation et logé de manière immobile le long de l'axe de rotation (22) par l'entraînement (20) par le biais d'un engrenage d'entraînement (57),
et dans laquelle l'autre des deux composants est la broche principale (12).

2. Machine-outil selon la revendication 1, **caractérisée en ce que** la direction du mouvement de la broche principale (12) le long de l'axe de rotation (22) est dépendante entre autres de la force (F_{Z}) générée par le dispositif d'avance (32), du couple de rotation généré par l'entraînement (20), de la force de résistance agissant le long de l'axe de rotation (22) que subit un outil (16) reçu dans le logement d'outil (14) dans la pièce à usiner (18), et du couple de résistance que subit l'outil (16) par rapport à une rotation autour de l'axe de rotation (22) dans la pièce à usiner (18).

3. Machine-outil selon la revendication 1 ou 2, **caractérisée en ce que** le premier composant (54) présente un manchon (56) dont la paroi présente un évidement hélicoïdal du côté interne qui est délimité par deux faces hélicoïdales.

4. Machine-outil selon la revendication 3, **caractérisée en ce que** le tenon d'entraînement (70a, 70b) présente un tourillon saillant radialement (74) qui s'engrène dans l'évidement hélicoïdal (64).

5. Machine-outil selon la revendication 1 ou 2, **caractérisée en ce que** le premier composant présente un manchon (56) dont la paroi présente un passage hélicoïdal (64) qui est délimité par deux faces hélicoïdales (66a, 66b).

6. Machine-outil selon la revendication 5, **caractérisée en ce que** le tenon d'entraînement (70) présente un tourillon saillant radialement (74) qui s'engrène dans le passage hélicoïdal (64).

7. Machine-outil selon la revendication 4 ou 6, **caractérisée en ce que** le tourillon (74) porte une molette (70a) qui est appliquée sur une des faces hélicoïdales (66a, 66b).

8. Machine-outil selon une des revendications 3 à 7, **caractérisée en ce que** le second composant présente deux tenons d'entraînement (70a, 70b) qui font saillie en direction radiale à l'opposé de la broche principale (12).

9. Machine-outil selon une des revendications précédentes, **caractérisée en ce que** le dispositif d'avance (32) présente un stator (36) disposé de manière fixe dans un logement et un rotor (44) logé de manière mobile axialement le long de l'axe de rotation (22) qui transfère ses mouvements axiaux à la broche principale (12).

10. Machine-outil selon la revendication 9, **caractérisée en ce que** le rotor (44) peut être positionné dans une position de repos axiale par un premier électroaimant (42), et qu'un second électroaimant (38) avec lequel une force d'avance dirigée vers le logement de pièce à usiner (14) peut être générée est disposé dans le stator (36).

11. Machine-outil selon une des revendications précédentes, **caractérisée par** un dispositif de commande (26) qui est configuré pour commander le dispositif d'avance (32) de sorte que l'outil (16) avance dans la pièce à usiner (18) avec un mouvement d'avance, auquel sont superposées des oscillations, au moins au cours d'une période après la pénétration de l'outil (16) dans la pièce à usiner (18).

12. Procédé pour l'usinage par enlèvement de copeaux de pièces à usiner (18) avec les étapes suivantes :
a) entraînement d'une broche principale (12) qui porte côté extrémité un logement d'outil (14) avec un outil (16) inséré en son sein de sorte que la broche principale (12) tourne autour d'un axe de rotation (22) ;
b) exercice d'une force agissant le long de l'axe de rotation (22) sur la broche principale (12) à l'aide d'un dispositif d'avance (32) ;
**caractérisé en ce que**
la broche principale (12) est mise en rotation et déplacée simultanément le long de l'axe de rotation (22) à l'aide d'un engrenage hélicoïdal (52) qui connecte un entraînement (20) à la broche principale (12).

13. Procédé selon la revendication 12, **caractérisé en ce que** la direction du mouvement parallèlement à l'axe de rotation (22) est dépendante entre autres de la force générée par le dispositif d'avance (32), d'un couple de rotation généré par l'entraînement (20), de la force de résistance agissant le long de l'axe de rotation (22) que subit l'outil (16) dans la pièce à usiner (18), et du couple de résistance que subit l'outil (16) par rapport à une rotation autour de l'axe de rotation (22) dans la pièce à usiner (18).
